# FASCICULE DE BREVET EUROPEEN

(11) **EP 1 660 953 B1**
(45) Date de publication et mention de la délivrance du brevet: **12.01.2011**
(21) Numéro de dépôt: 04764420.8
(22) Date de dépôt: 24.08.2004
(51) Int. Cl.: G04G 21/04

(54) **MONTRE A BOITIER METALLIQUE COMPRENANT UN MODULE ELECTRONIQUE POUR LA MEMORISATION D'INFORMATIONS**
METALLGEHÄUSE-UHR MIT EINEM ELEKTRONISCHEN MODUL ZUM EINLESEN VON INFORMATIONEN
METAL CASE WATCH PROVIDED WITH AN ELECTONIC MODULE FOR READING IN INFORMATION

(30) Priorité: 02.09.2003 EP 03019951
(43) Date de publication de la demande: 31.05.2006
(73) Titulaire: The Swatch Group Management Services AG, 2501 Biel (CH)
(72) Inventeur: VUILLEUMIER, Jean-Claude, Ch-2088 Cressier (CH); APOTHELOZ, David, CH-2035 Corcelles (CH); MUELLER, Jacques, CH-2732 Reconvilier (CH); MEYRAT, Clément, CH-2525 Le Landeron (CH)
(74) Mandataire: Vigand, Philippe
(86) Numéro de dépôt international: PCT/EP2004/009442
(87) Numéro de publication internationale: WO 2005/024528

(56) Documents cités:
- EP-A- 1 288 016
- EP-A- 1 398 676
- WO-A-03/052526
- DE-A- 19 613 491
- DE-A- 19 946 254
- US-A1- 2003 117 336

## Description

La présente invention concerne une montre à boîtier métallique, telle qu'une montre-bracelet, comprenant un module électronique pour la mémorisation d'informations. Ledit module électronique est logé au moins en majeure partie dans une cavité ouverte vers l'extérieur que présente une surface extérieure de la montre et peut communiquer par des signaux radio-diffusés avec un appareil de lecture et/ou d'écriture desdites informations. Ce module comprend un socle sur lequel sont montés une puce de circuit intégré présentant au moins deux bornes de connexion et une bobine servant d'antenne d'émission et/ou de réception. La bobine est constituée par un fil électriquement conducteur ayant deux extrémités reliées respectivement aux dites bornes de connexion de ladite puce de circuit intégré. Cette bobine entoure un espace dans lequel est placée ladite puce.

Dans le cas d'une montre-bracelet, des modules électroniques, par exemple pour la mémorisation d'informations sont généralement placés à l'intérieur du boîtier de montre. Ces modules électroniques comprennent une puce de circuit intégré reliée à une bobine servant d'antenne pour communiquer par des signaux radio-diffusés avec un appareil de lecture et/ou d'écriture. Cet appareil de lecture et/ou d'écriture peut être prévu pour au moins lire les informations contenues dans une mémoire de la puce de circuit intégré ou pour supprimer ou modifier au moins une partie de ces informations et en ajouter d'autres.

La demande de brevet EP 1 288 016 A1 décrit un module électronique muni d'un transpondeur. Ce module, qui peut être placé sur une surface métallique, comprend une puce de circuit intégré montée sur un socle conducteur de flux magnétique, et une bobine pour l'émission et/ou la réception de signaux radio-diffusés. La bobine est reliée à la puce à circuit intégré et entoure ladite puce.

Plus précisément, l'invention se rapporte à une montre à boîtier métallique comprenant un module électronique de type passif. Le terme "passif' signifie que ce module n'est pas muni d'une propre source d'énergie, telle qu'une pile ou un accumulateur, pour pouvoir fonctionner. L'énergie électrique de ce module est fournie par les signaux radio-diffusés de l'appareil de lecture et/ou d'écriture avec lequel il coopère.

De telles montres sont prévues par exemple pour simplement mémoriser un code d'accès à des locaux privés ou protégés ou à des pistes de ski. D'autres montres avec des modules électroniques équipés de puces de circuits intégrés plus compliquées peuvent contenir des données personnelles, telles que les dossiers médicaux de leurs propriétaires.

Dans certaines montres connues, le module électronique est placé dans une lunette creuse, de préférence amovible, pour pouvoir changer le module si nécessaire. Une telle solution ne peut donc pas convenir à des montres ayant n'importe quel type de boîtier. De plus, si le boîtier comporte effectivement une lunette ou une carrure-lunette, cela complique la fabrication de cette dernière et augmente par conséquent le prix de revient de la montre.

Dans d'autres montres, le module est placé dans un espace prévu entre l'arrière du mouvement de ces montres et le fond de leur boîtier, ce qui augmente forcément leur volume. D'autre part, si le fond du boîtier est en un matériau qui n'est pas amagnétique, par exemple en acier, le flux magnétique engendré ou reçu par la bobine du module électronique subit des pertes importantes. Même si des mesures sont prises pour limiter ces pertes, celles-ci sont loin d'être négligeables. Ceci réduit la distance de communication entre un appareil de lecture et/ou d'écriture et le module électronique. Enfin, même si le fond du boîtier est en matériau amagnétique, par exemple en matière plastique, en or, argent ou aluminium, les signaux radio-diffusés émis et reçus par la bobine du module qui doivent traverser toute l'épaisseur de ce fond subissent une atténuation importante.

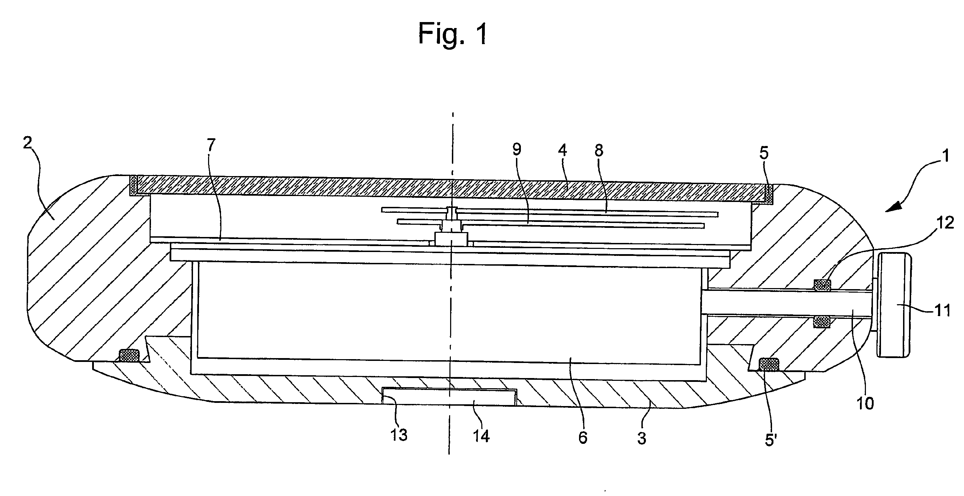

Le document DE 196 13 491 décrit une montre comportant un module électronique transpondeur monté dans une cavité de son fond (figure 1c).

L'invention a donc pour but principal de pallier les inconvénients de l'art antérieur en fournissant une montre à boîtier métallique comprenant un module électronique agencé pour atténuer des perturbations dues au boîtier métallique de la montre lors d'une communication avec un appareil de lecture et/ou d'écriture d'informations. De plus, le module de la montre est agencé pour augmenter la distance de lecture et/ou d'écriture lors d'une communication avec ledit appareil.

A cet effet, l'invention concerne une montre à boîtier métallique telle que définie dans la revendication 1.

De préférence, la montre à boîtier métallique est une montre-bracelet. De ce fait, il est nécessaire que le socle métallique soit en un matériau à forte perméabilité de manière à servir de blindage magnétique pour la bobine dudit module. La partie du socle, sur laquelle sont montés la puce et la bobine, doit de préférence être positionnée entre la surface extérieure de la montre recevant le module et la bobine. De cette manière, une meilleure atténuation des perturbations dues au boîtier métallique lors d'une communication avec un appareil de lecture et/ou d'écriture d'informations est obtenue.

De préférence, le socle forme une cuvette à fond plat dans laquelle est montée la bobine et la puce de circuit intégré. La hauteur de la paroi latérale de ladite cuvette comptée depuis la surface intérieure du fond plat est supérieure à l'épaisseur de la bobine et de la puce de manière que la bobine et la puce de circuit intégré ne dépasse pas le bord supérieur de ladite cuvette. De cette façon, un meilleur blindage magnétique est obtenu ce qui permet d'augmenter la distance de lecture et/ou d'écriture entre un appareil de lecture et/ou d'écriture et ledit module.

Une cavité extérieure ou trou borgne peut être réalisé sur une surface extérieure du boîtier de la montre pour loger en majeure partie ledit module. De préférence, cette cavité est de forme complémentaire au socle dudit module. Si le socle a une forme de cuvette, cette cuvette est introduite dans ladite cavité de manière que le fond de cette cuvette vienne en contact direct avec le fond de ladite cavité. Ceci permet de bien isoler magnétiquement la bobine dudit module du boîtier métallique.

Le socle peut également être une simple plaque sur laquelle sont fixées la bobine de forme annulaire et la puce de circuit intégré logée à l'intérieur de ladite bobine. De la résine pour encapsuler la puce de circuit intégré peut être mise dans l'espace laissé libre à l'intérieur de la bobine. La plaque du module est positionnée entre le fond de la cavité et la bobine.

De préférence, un couvercle de protection est placé sur ledit socle pour enfermer la bobine et la puce de circuit intégré à l'aide dudit socle. Ce couvercle peut être réalisé dans un matériau neutre comme du plastique ou de la céramique. Dans ce cas, uniquement une partie du couvercle fait saillie en dehors de la cavité après avoir introduit ledit module dans ladite cavité.

Ainsi, contrairement à une montre, dans lequel le module est placé à l'intérieur de celle-ci, les signaux émis et reçus par la bobine du module de la montre selon l'invention n'ont qu'à traverser le couvercle de protection du module dont l'épaisseur est bien inférieure à celle du fond du boîtier de montre par exemple.

Il est possible d'utiliser une montre existante, et de former dans son fond, notamment par fraisage, un trou borgne ou cavité extérieure de forme adaptée à celle du module électronique. De ce fait, le module peut être monté avantageusement dans la cavité après toutes les étapes de fabrication de la montre-bracelet.

De préférence, la cavité et le module ont une forme essentiellement cylindrique et sont situés au centre du fond du boîtier.

Grâce au socle du module électronique, ce module peut être placé sur toute surface extérieure de la montre, que cette surface soit d'un matériau métallique ou isolant. Ce module est ainsi relativement bien isolé magnétiquement lorsqu'il est monté sur un boîtier en acier, en aluminium, en argent ou en un autre matériau magnétique.

Les buts, avantages et caractéristiques de la montre à boîtier métallique, ainsi que le module électronique monté sur la montre apparaîtront mieux dans la description suivante de formes d'exécution non limitatives de l'invention en liaison avec les dessins dans lesquels :
La figure 1 représente une coupe diamétrale schématique d'une montre-bracelet à affichage analogique, avec un module électronique selon l'invention,
les figures 2a et 2b représentent une vue en coupe diamétrale agrandie de la zone du fond du boîtier de la figure 1 dans laquelle se trouve incorporé un module électronique selon une première forme d'exécution, et une vue de dessous incomplète du module électronique sans couvercle de protection,
la figure 3 est une vue en coupe diamétrale agrandie de la zone du fond du boîtier de la figure 1 dans laquelle se trouve incorporé un module électronique selon une deuxième forme d'exécution,
la figure 4 est une vue en coupe diamétrale agrandie de la zone du fond du boîtier de la figure 1 dans laquelle se trouve incorporé un module électronique selon une troisième forme d'exécution,
la figure 5 est une vue en coupe diamétrale agrandie de la zone du fond du boîtier de la figure 1 dans laquelle se trouve incorporé un module électronique selon une quatrième forme d'exécution, et
les figures 6a et 6b représentent une vue de dessus et une vue de côté d'une barrette comprenant plusieurs cuvettes de blindage magnétique dans chacune desquelles sont montés une bobine et une puce de circuit intégré pour permettre l'automatisation de l'assemblage des modules électroniques.

La description suivante sera faite en référence à une montre-bracelet équipée d'un module électronique pour mémoriser des informations. Les informations mémorisées ou à mémoriser concernent la montre elle-même, et/ou des données personnelles du porteur de ladite montre. Le module électronique est destiné à être placé à une très faible distance (quelques millimètres au plus) de la bobine qui constitue l'antenne d'émission et/ou de réception d'un appareil de lecture et/ou d'écriture avec lequel il est amené à communiquer.

La montre-bracelet est représentée schématiquement à la figure 1. Elle comprend un boîtier métallique désigné par la référence générale 1. Ce boîtier 1 comprend une carrure-lunette métallique 2, un fond 3 également métallique et une glace 4. La glace est fixée de façon classique sur la carrure-lunette 2 par serrage au moyen d'une garniture 5 qui sert en même temps à assurer l'étanchéité du boîtier au niveau de cette glace.

Comme représenté sur la figure 1, le fond 3 est fixé à la carrure-lunette 2 par encliquetage mais il pourrait tout aussi bien l'être par exemple par vissage ou par un système à baïonnette, de façon à comprimer une garniture 5' qui assure l'étanchéité du boîtier au niveau de ce fond.

Enfin, le boîtier 1 comprend également un système d'attache d'un bracelet qui n'est pas visible sur la figure 1 et qui peut être constitué par deux paires de cornes que présente la camure-lunette 2.

Dans le boîtier 1 de montre est logé un mouvement 6 qui entraîne une aiguille de minutes 8 et une aiguille d'heures 9 placées devant un cadran 7 et qui comprend une tige de commande 10 qui traverse la carrure-lunette 2 et se termine par une couronne 11, l'étanchéité du boîtier 1 à l'endroit du passage de cette tige à travers la carrure-lunette étant assurée par un joint annulaire 12. Si la montre n'est pas de type électromécanique ou à remontage automatique, la tige 10 et la couronne 11 servent également à remonter cette montre.

Bien entendu, la montre-bracelet peut être également du type à circuit garde-temps et à affichage numérique de l'heure.

Conformément à l'invention, le fond 3 du boîtier 1 présente une cavité 13 qui est ouverte vers l'extérieur du boîtier et dans laquelle est logé en partie un module électronique 14. Cette cavité peut par exemple être réalisée simplement par fraisage.

Etant donné que, d'une part, dans l'application envisagée ici, le module électronique 14 a une surface nettement inférieure à celle du fond du boîtier et que, d'autre part, ce module peut être réalisé sous différentes formes, il est seulement représenté sur la figure 1 par un rectangle. Ce module peut avoir une épaisseur de l'ordre de 1 mm et un diamètre de l'ordre de 6 mm.

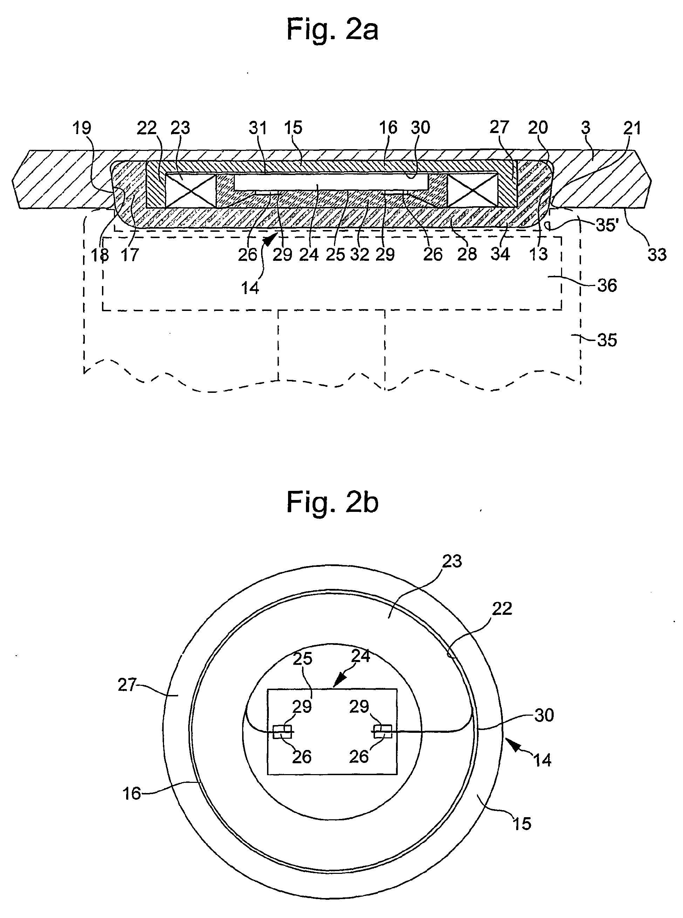

La figure 2a est une vue en coupe agrandie de la zone du fond 3 du boîtier 1 de la figure 1 qui montre une première forme d'exécution du module électronique 14 qui peut être inséré de façon durable dans la cavité 13 de ce fond.

Dans cette forme d'exécution, le module 14 comprend principalement un socle 15 sur lequel sont montés une bobine 23 servant d'antenne pour la communication d'informations et une puce de circuit intégré 24 reliée à la bobine. Le socle est un élément métallique conducteur de flux magnétique pour isoler magnétiquement la bobine 23 du module lorsqu'il est logé dans la cavité 13 du fond 3 du boîtier métallique. Ce socle 15 est en forme de cuvette et présente un fond plat 16 et une paroi latérale essentiellement cylindrique 27 pour entourer sur deux côtés la bobine. Le socle en forme de cuvette est monté dans ladite cavité de manière que le fond plat 16 soit disposé entre le fond de la cavité 13 et la bobine 23 montée sur ledit socle. Le fond 16 du socle peut venir en contact du fond de la cavité 13.

Un couvercle de protection 28, qui comprend un fond et une paroi latérale circulaire 17, est prévu pour recouvrir le socle 15 afin d'enfermer la bobine 23 et la puce de circuit intégré 24 fixés sur le fond 16 du socle 15. Le socle peut être fixé dans le couvercle notamment par collage ou maintenu mécaniquement par friction entre la surface intérieure de la paroi 17 du couvercle et la surface extérieure de la paroi 27 du socle. Lorsque le module électronique est logé dans ladite cavité 13, une partie de la base du couvercle 28 est légèrement en saillie par rapport à la face externe 33 du fond 3 du boîtier 1.

Le matériau constituant le couvercle de protection 28 peut être par exemple une matière plastique comme le polyéthylène à haute densité ou une céramique ou du saphir. La matière plastique est plutôt réservée aux montres de bas de gamme et de gamme moyenne, alors que la céramique ou le saphir est réservé aux montres de haut de gamme. Si le matériau est de la céramique, cette dernière est de préférence choisie de façon à avoir sensiblement la même couleur et le même aspect que le métal qui constitue le fond du boîtier sauf si un effet esthétique particulier est recherché.

Comme représenté à la figure 2a, l'épaisseur de la paroi 17 du couvercle 28 augmente légèrement et de façon continue depuis sa base jusqu'à son sommet. Ainsi, la surface extérieure 18 de la paroi 17 présente une forme particulière qui lui permet de coopérer avec la paroi interne 19 de la cavité 13 qui a une forme complémentaire pour constituer un moyen d'assemblage du type queue d'aigle ou queue d'aronde.

De plus, le bord externe 20 de la paroi 17 du couvercle et le bord 21 de la paroi 19 de la cavité 13 sont arrondis pour faciliter l'introduction du module 14 dans cette cavité.

La figure 2b est une vue de dessous du module électronique 14 de la figure 2a en l'absence d'une matière adhésive de remplissage dont il sera question par la suite et du couvercle de protection.

En se reportant aux figures 2a et 2b, on peut voir que la paroi latérale 27 du socle 15 présente une surface interne 22 vraiment cylindrique, qui entoure une bobine annulaire, plus précisément cylindrique, plate et autoporteuse 23. Cette bobine est constituée de manière connue de plusieurs couches de spires jointives et coaxiales non visibles sur le dessin, réalisées au moyen d'un fil métallique très fin, de préférence en cuivre. Le fil de la bobine est entouré d'une gaine ou matière isolante et thermo-adhérente qui fond partiellement par chauffage. De cette manière, toutes les parties de cette gaine qui entourent les spires du fil se soudent entre elles lorsqu'on laisse ensuite la bobine se refroidir.

La bobine 23 entoure elle-même une puce de circuit intégré 24, en forme de parallélépipède rectangle et plus petite qu'elle. La puce de circuit intégré 24 présente sur sa face avant 25 deux bornes de connexion ou "bumps" (en terminologie anglaise) 26 sur lesquels sont soudées ou fixées par thermo-compression ou au moyen d'un adhésif conducteur les deux extrémités 29 du fil métallique de la bobine 23.

Comme représenté sur les figures 2a et 2b, les deux bornes de connexion 26 de la puce 24 sont disposées à l'opposé l'une de l'autre dans le sens de la longueur de la puce 24. Toutefois, il est bien clair qu'elles pourraient être placées autrement sur la face avant de cette puce, par exemple côte à côte dans le sens de sa largeur.

Dans cette première forme d'exécution, la bobine 23 et la puce 24 sont fixées directement sur la face interne 30 du fond plat 16 du socle 15 au moyen d'une mince couche de matériau adhésif 31. L'espace laissé libre par la puce à l'intérieur de la bobine est rempli d'une matière adhésive, isolante et thermodurcissable 32, par exemple une résine époxyde. Ceci permet de protéger les extrémités 29 du fil de la bobine 23 et leurs moyens de fixation sur les bornes de connexion 26 tant que le couvercle de protection 28 du module 14 ne les recouvre pas. De plus, la matière adhésive 32 est de préférence opaque pour protéger également la puce contre la lumière avant cette incorporation.

Comme le fond 3 du boîtier 1 est réalisé en un matériau magnétique, par exemple en acier, ou en aluminium, le socle 15 sert de blindage magnétique entre le fond du boîtier de montre et la bobine. De cette façon, les pertes de flux magnétique du module électronique sont fortement atténuées lorsque la bobine émet ou reçoit des signaux radio-diffusés respectivement vers et d'un appareil de lecture et/ou d'écriture avec lequel elle peut être couplée. De plus, grâce au matériau choisi du socle selon l'invention, la distance maximale pour la lecture et l'écriture d'informations est plus élevée qu'avec un socle isolant. Cette distance peut être supérieure à 8 mm même si le module est placé dans une cavité d'un boîtier métallique. Cette distance dépend également de l'émetteur et de son antenne.

Comme le montre la figure 2a, le module 14 est légèrement en saillie par rapport à la face externe 33 du fond 3 du boîtier 1 pour former un bossage 34 prévu pour positionner au mieux et rapidement une tête 35 d'un appareil de lecture et/ou d'écriture. La tête de cet appareil est représentée partiellement et schématiquement à l'aide de traitillés sur la figure 2a. Cette tête, qui comprend également une bobine 36 servant d'antenne, présente un évidement 35' de forme et de dimensions correspondant à celle du bossage 34. La tête peut être reliée par l'intermédiaire d'une interface à un appareil conçu pour communiquer avec la mémoire du module de la montre. L'appareil peut être un ordinateur personnel (PC) fixe ou portable.

Evidemment, le bossage 34 du module permettrait de placer de la même façon la montre sur un support qui présenterait un évidement correspondant à la forme et aux dimensions de ce bossage.

De plus, lorsque le module est en saillie par rapport au fond du boîtier 1, son arête externe est de préférence arrondie pour éviter que le porteur de la montre soit incommodé par le bossage 34. Toutefois, il peut être prévu uniquement un chanfrein en lieu et place de la partie arrondie.

Les ondes radio-diffusées émises et reçues par la bobine 23 du module 14 n'ont plus à traverser toute l'épaisseur du fond métallique 3 du boîtier 1 de la montre mais seulement celle du fond du couvercle 28 du module qui est beaucoup plus faible. Ainsi, ces ondes seront beaucoup moins atténuées et déformées que dans le cas des montres connues dans lesquelles le module électronique est placé au fond mais à l'intérieur du boîtier.

Comme il est nécessaire d'avoir un matériau à forte perméabilité afin de servir de blindage magnétique, le matériau utilisé pour le socle peut être composé de ferrite, ou d'un alliage de nickel, de fer, de cuivre et de molybdène. De préférence, l'alliage est composé de 70 à 80 % de nickel et de 10 à 20 % de fer. Il peut être utilisé un matériau connu sous la marque Mumétal®.

Le matériau du socle peut être également composé de fer doux pur par exemple connu sous la marque Sulem®.

Avec ces types de matériaux utilisés pour le socle, il est possible d'augmenter la distance séparant l'appareil de lecture et/ou d'écriture du module pour les opérations de lecture et/ou d'écriture d'informations de la mémoire de la puce de circuit intégré.

Dans le tableau ci-dessous, il est représenté des distances maximales entre un appareil de lecture et/ou d'écriture et un module électronique (TAG) pour la lecture et/ou l'écriture d'informations en fonction du matériau du boîtier de montre et du matériau composant le socle.

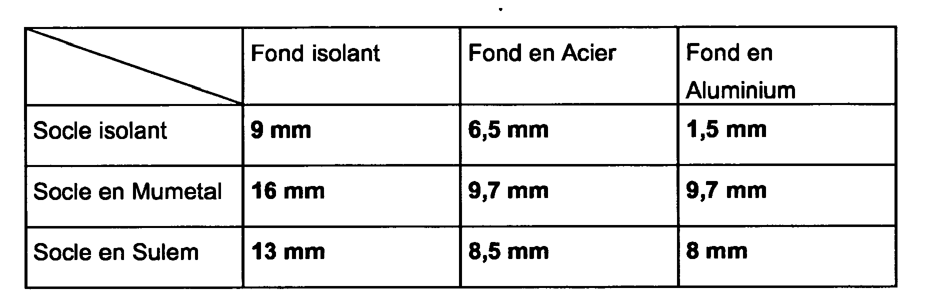

On remarque dans le tableau ci-dessus qu'avec un socle réalisé dans un matériau métallique à forte perméabilité, la distance maximale pour la lecture et l'écriture d'informations est supérieure à 8 mm quel que soit le fond sur lequel est placé le module électronique. Si la montre est placée dans une boîte d'emballage, cela permet de pouvoir ainsi lire ou écrire des informations à travers ladite boîte.

La puce de circuit intégré 24 peut comprendre un ou plusieurs types de mémoire pour stocker des informations. Il peut s'agir par exemple d'une mémoire pour stocker des informations qui ne peuvent être que lues ou d'une mémoire pour stocker d'autres informations qui peuvent en plus être supprimées et/ou modifiées ou encore complétées par des informations supplémentaires.

C'est le cas dans l'exemple d'application prévu précédemment où le module électronique permet de mémoriser des informations qui concernent la montre elle-même, plus précisément ses origines, son acquéreur et, comme pour une voiture, son "livret d'entretien" qui permettent de la personnaliser. Ceci peut être un argument de vente et ainsi faciliter les interventions d'un horloger lorsque la montre lui est confiée pour un contrôle, une réparation ou un simple changement de pile si la montre est du type électromécanique ou électronique.

Pour des montres de moyen ou haut de gamme, les informations mémorisées dans le module électronique peuvent être divisées par exemple en quatre catégories. Une première catégorie concerne la marque ou modèle de la montre vendue, ainsi qu'une date et une adresse d'expédition de cette montre chez un détaillant. Une seconde catégorie concerne l'usine de fabrication notamment du mouvement de montre. Une troisième catégorie concerne les références du point de vente. Finalement, une quatrième catégorie concerne des services clients relatifs par exemple aux diverses interventions effectuées sur la montre par le vendeur ou le détaillant.

Parmi ces informations certaines peuvent être stockées dans une mémoire de type ROM afin de pouvoir seulement être lues. C'est le cas par exemple pour les première et seconde catégories susmentionnées.

Les informations des deux autres catégories peuvent être stockées dans une ou plusieurs mémoires dynamiques de type RAM, EPROM ou EEPROM afin de pouvoir éventuellement être effacées, modifiées ou complétées.

Dans tous les cas, la bobine d'une tête de lecture ou d'un support peut être reliée par l'intermédiaire d'une interface adéquate à un ordinateur fixe ou portable qui permet de lire les informations contenues dans la ou les mémoires du module et si possible de supprimer, de modifier et de compléter certaines d'entre elles.

De là, ces informations peuvent être diffusées sur un site protégé d'Internet ou sur une boucle Intranet auxquels peuvent avoir accès toutes les personnes concernées par la montre.

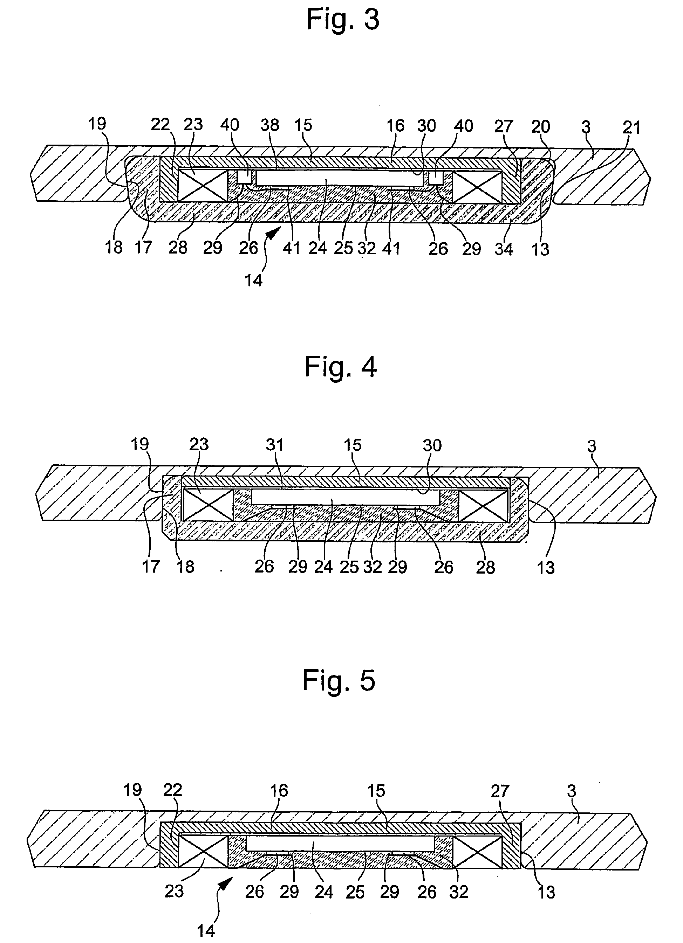

La figure 3 est une vue analogue à celle de la figure 2a qui montre une deuxième forme d'exécution du module électronique d'une montre selon l'invention. Sur cette figure, les mêmes éléments sont désignés par les mêmes références et seules les parties nouvelles sont indiquées par de nouvelles références.

Une des différences de cette deuxième forme d'exécution par rapport à celle présentée à la figure 2a est que la bobine 23 et le circuit 24 ne sont plus collés directement sur la face interne 30 du fond 16 du socle 15 mais sur le substrat d'un circuit imprimé 38. Ce substrat peut être également collé sur le fond 16 du socle 15 du module 14 ou simplement chassé à l'intérieur de ce socle.

L'autre différence est due au fait que les extrémités du fil 29 de la bobine 23 ne relient plus directement cette bobine aux bornes 26 de la puce de circuit intégré 24 mais par l'intermédiaire de plots de connexion 40 formés sur le substrat du circuit imprimé 38. Plus précisément, chaque extrémité du fil 29 est soudée ou fixée par thermo-compression ou collée au moyen d'un adhésif électriquement conducteur sur l'un des plots 40 et ce dernier est à son tour relié à une borne de connexion 26 de la puce de circuit intégré 24 par un fil conducteur 41.

Grâce à cela la bobine 23 et la puce de circuit intégré 24 peuvent être connectées électriquement en utilisant la méthode classique et automatisée du "wire bonding" en terminologie anglaise.

Dans la troisième forme d'exécution représentée en coupe sur la figure 4, la surface extérieure 18 de la paroi latérale 17 du couvercle 28 ainsi que la paroi interne 19 de la cavité 13 du fond 3 du boîtier de montre sont toutes les deux cylindriques. Le module 14 est fixé à l'intérieur de la cavité par chassage ou par collage. De plus, le bord externe de la paroi 17 du couvercle 28 n'est plus arrondi comme dans la première forme d'exécution des figures 2a et 2b mais avec un chanfrein.

Dans cette troisième forme d'exécution, le socle métallique 15 est une plaque rigide, qui porte la bobine 23 et la puce de circuit intégré 24. Ce socle est inséré dans le couvercle 28 afin d'enfermer ladite bobine et ladite puce. Comme pour les précédentes formes d'exécution décrites ci-dessus, le socle est positionné entre la bobine et le fond de la cavité 13 pour le blindage magnétique de la bobine. Cependant, le socle 15 ne couvre qu'une surface de la bobine et est donc moins performant qu'un socle en forme de cuvette décrit ci-devant. Cette plaque rigide 15 peut avoir un diamètre extérieur légèrement supérieur à celui de la bobine 23.

Cette forme d'exécution est mieux adaptée lorsque le fond 3 du boîtier et/ou le couvercle 28 du module 14 sont constitués par des matériaux durs qui sont difficiles à usiner ou à mettre en forme.

D'autre part, dans cette troisième forme d'exécution comme dans celle des figures 2a et 2b, les extrémités 29 du fil de la bobine 23 sont directement fixées sur les bornes de connexion 26 de la puce de circuit intégré 24, mais il est bien évident que ces extrémités du fil et ces bornes 26 pourraient être reliées de la même façon que dans la forme d'exécution de la figure 3.

A noter que dans une autre forme d'exécution qui n'est pas représentée sur le dessin, le module 14 pourrait être fixé dans la cavité 13 du fond 3 du boîtier par sertissage. Le couvercle 28 du module présenterait alors du côté de son fond une entaille périphérique externe dans laquelle s'engagerait un rebord interne du fond 3. Cette méthode de fixation du module pourrait être utilisée par exemple lorsque le collage et le chassage ne seraient pas possibles.

Dans la quatrième forme d'exécution du module électronique, représentée à la figure 5, le socle métallique en forme de cuvette 15 pour le blindage magnétique, comme représenté sur les figures 2a et 3, n'est pas recouvert d'un couvercle de protection. La protection dudit module contre des dommages mécaniques n'est assurée que par la résine d'encapsulation 32 de la puce de circuit intégré 24 et la propre isolation des fils de la bobine 23. Cependant à la différence des précédentes formes d'exécution, aucune partie dudit module 14 introduit dans ladite cavité 13 de forme complémentaire au socle 15 n'est en saillie à l'extérieur de ladite cavité 13. Le module 14 peut être chassé ou collé dans la cavité 13 du fond du boîtier.

Pour cette quatrième forme d'exécution, la remarque faite précédemment à propos de la connexion entre les extrémités du fil de la bobine et les bornes de la puce de circuit intégré est également valable.

Toutefois, au lieu de relier les extrémités du fil de la bobine aux bornes de la puce de circuit intégré comme décrit ci-devant, cette liaison pourrait être obtenue en utilisant une méthode de liaison automatisée bien connue sous l'abréviation TAB (Tape Automatic Bonding) qui est décrite dans le brevet européen No 0 376 062. Cette méthode peut aussi être appliquée pour des modules équipant des montres à boîtier métallique, telles que des montres-bracelets.

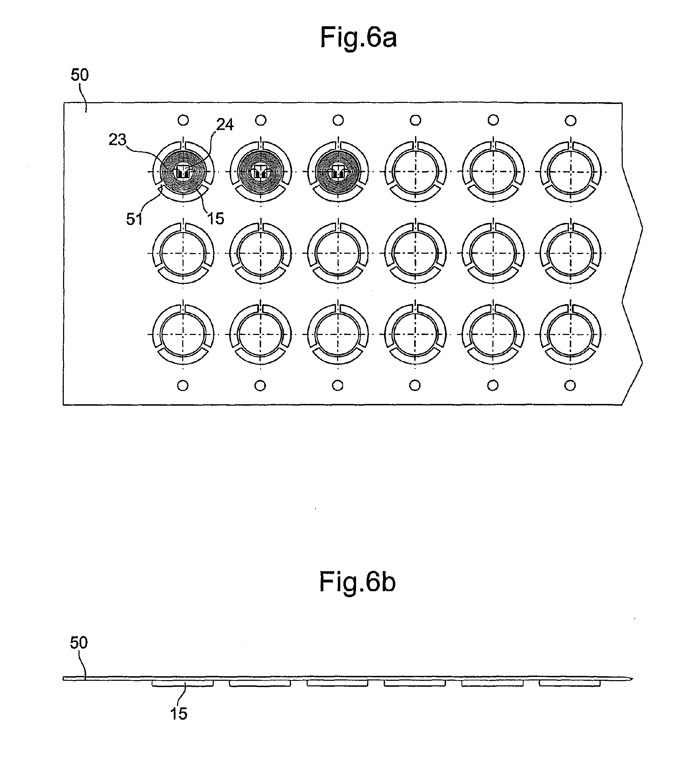

Les figures 6a et 6b représentent uniquement une barrette 50 d'un alliage métallique qui peut être facilement usiné ou étampé de manière à pouvoir automatiser l'assemblage des composants du module électronique. Cette barrette 50 peut être par exemple en fer doux pur ou en alliage de la marque Mumetal®. Avec ce type de matériau métallique, il est aisé de réaliser plusieurs socles 15 sous forme de cuvette dans la barrette. Chaque socle est maintenu au reste de la barrette par exemple par trois ponts 51.

Dans des étapes de fabrication de modules électroniques, une bobine 23 et une puce de circuit intégré 24 sont fixées dans chaque cuvette 15. Par la suite, des fils de connexion relient les bornes de contact de la puce de circuit intégré aux extrémités de la bobine. De la résine est ensuite appliquée sur la puce pour combler également l'espace libre entre la bobine et la puce de circuit intégré. Une fois que tous les modules électroniques sont terminés dans la barrette 50, ils peuvent être successivement séparés de la barrette. Chaque socle peut être ensuite recouvert par un couvercle de protection avant l'introduction du module dans une cavité du fond du boîtier d'une montre. Toutes ces opérations peuvent être automatisées pour gagner du temps en production de ces montres à module électronique.

A partir de la description qui vient d'être faite de multiples variantes de réalisation de la montre à boîtier métallique ou du module électronique peuvent être conçues par l'homme du métier sans sortir du cadre de l'invention définie par les revendications. Le module électronique peut être intégralement logé dans une cavité extérieure de la montre sans aucune partie en saillie, mais avec des moyens de positionnement prévus d'une tête de lecture. De plus, dans ces formes et variantes d'exécution, le module électronique est fixé à demeure dans la cavité. Cependant, il serait possible de concevoir un module avec un couvercle de protection du socle métallique, qui est muni d'une paroi latérale pour lui permettre de coopérer avec une paroi interne de la cavité de façon à rendre ce module amovible et interchangeable. Ce module peut être par exemple vissé ou fixé par un système à baïonnette.

La bobine et la puce de circuit intégré peuvent être fixés dans le couvercle de protection avant d'être montés sur le socle métallique. La bobine peut être d'une autre forme qu'un anneau circulaire. Elle peut être réalisée sous forme rectangulaire, ou décrivant une portion de boucle autour de la puce de circuit intégré.

Le socle peut comprendre une fente diamétrale afin d'éviter d'éventuelles perturbations par courant de Foucault.

## Revendications

1. Montre à boîtier métallique comprenant un module électronique (14) pour la mémorisation d'informations qui est logé au moins en majeure partie dans une cavité (13) ouverte vers l'extérieur, ladite cavité étant formée dans une surface extérieure de la montre, ladite cavité étant de forme complémentaire audit module, ledit module pouvant communiquer par des signaux radio-diffusés avec un appareil de lecture et/ou d'écriture (35) desdites informations, ledit module comprenant un socle (15) sur lequel sont montés une puce de circuit intégré (24) présentant au moins deux bornes de connexion (26) et une bobine (23) servant d'antenne d'émission et/ou de réception, ladite bobine étant constituée par un fil électriquement conducteur ayant deux extrémités (29) reliées respectivement aux dites bornes de connexion de ladite puce de circuit intégré, cette bobine entourant un espace dans lequel est placée ladite puce, le socle du module électronique (14) étant un élément métallique conducteur de flux magnétique pour isoler magnétiquement la bobine du module du boîtier métallique lors d'une communication d'informations entre ledit appareil de lecture et/ou d'écriture et ledit module, ledit module (14) et ladite cavité (13) ouverte vers l'extérieur logeant ledit module définissant des moyens pour positionner rapidement et avec précision une tête (35) de forme complémentaire dudit appareil de lecture et/ou d'écriture.

2. Montre selon la revendication 1, **caractérisée en ce que** le socle du module est réalisé en fer pur ou en un matériau comprenant un alliage de nickel, de fer, de cuivre et de molybdène, l'alliage étant composé notamment de 70 à 80 % de nickel et de 10 à 20 % de fer.

3. Montre selon la revendication 1, **caractérisée en ce que** ladite cavité (13) et ledit module (14) ont une forme essentiellement cylindrique et sont situés sensiblement au centre du fond (3) dudit boîtier (1).

4. Montre selon l'une des revendications 1 à 3, **caractérisée en ce que** ledit socle (15) est en forme de cuvette qui présente un fond plat (16) sur lequel sont fixées ladite bobine (23) de forme annulaire et ladite puce de circuit intégré (24) et une paroi latérale (27) entourant ladite bobine, la hauteur de la paroi latérale comptée depuis la surface intérieure du fond plat étant supérieure ou égale à l'épaisseur de la bobine ou de la puce, et **en ce que** le socle est logé dans une cavité (13) d'une surface extérieure de la montre entre la surface intérieure de la cavité et la bobine.

5. Montre selon la revendication 1, **caractérisée en ce que** te module électronique comprend un couvercle de protection (28) ayant une base et une paroi latérale circulaire (17), ledit couvercle étant placé sur ledit socle pour enfermer la bobine et la puce de circuit intégré à l'aide dudit socle (15), **en ce que** ledit couvercle est en matière plastique, en céramique ou en saphir, **en ce que** la paroi latérale (17) du couvercle est fixée en majeure partie dans ladite cavité, la base dudit couvercle étant en partie en saillie à l'extérieur de ladite cavité, et **en ce que** ledit module (14) est fixé par chassage dudit couvercle de protection (28) dans ladite cavité (13) ou par collage dans ladite cavité (13) ou par sertissage dans ladite cavité (13).

6. Montre selon la revendication 5, **caractérisée en ce que** l'épaisseur de ladite paroi latérale (17) du couvercle augmente légèrement et de façon continue depuis sa base jusqu'à son sommet pour avoir une surface extérieure (18) pouvant coopérer avec une paroi interne (19) de forme complémentaire de ladite cavité (13) afin de constituer un moyen d'assemblage de type queue d'aronde entre ledit module électronique (14) et la cavité de la surface de la montre.

7. Montre selon la revendication 5, **caractérisée en ce que** ladite paroi latérale (17) du couvercle (28) présente une surface extérieure (18) cylindrique et ladite cavité (13) une paroi interne (19) également cylindrique.

8. Montre selon l'une des revendications 1 à 3 et 5, **caractérisée en ce que** ledit socle (15) est constitué par une plaque rigide sensiblement circulaire sur laquelle sont fixées ladite bobine (23) de forme annulaire et ladite puce de circuit intégré (24), ledit socle étant positionné entre la surface extérieure de la montre et la bobine.

9. Montre selon la revendication 1, **caractérisée en ce que** ladite bobine (23) et ladite puce de circuit intégré (24) sont fixées directement par collage sur ledit socle (15), et **en ce que** lesdites extrémités (29) du fil de la bobine sont également fixées directement sur lesdites bornes (26) de la puce de circuit intégré au moyen d'un matériau électriquement conducteur.

10. Montre selon la revendication 1, **caractérisée en ce que** ladite bobine (23) et ladite puce de circuit intégré (24) sont fixées sur le substrat d'un circuit imprimé (38), et **en ce que** ledit circuit imprimé présente deux plots de connexion (40) situés entre ladite bobine et ladite puce, sur lesquels sont fixées lesdites extrémités (29) du fil de ladite bobine et deux extrémités de deux fils conducteurs (41) dont les autres extrémités sont fixées sur lesdites bornes de connexion (26) de ladite puce.

11. Montre selon la revendication 1, **caractérisée en ce que** ledit module (14) logé dans la cavité présente une partie en saillie à l'extérieur du fond (3) dudit bottier (1) pour définir des moyens pour positionner rapidement et avec précision une tête (35) de forme complémentaire d'un appareil de lecture et/ou d'écriture.

## Claims

1. Watch with a metallic case including an electronic module (14) for storing data, which is housed at least mostly in a cavity (13) open towards the exterior, said cavity being formed in an external surface of the watch, said cavity being of complementary shape to said module, said module being able to communicate via broadcast signals with a read and/or write apparatus (35) for said data, said module including a base (15) on which are mounted an integrated circuit chip (24) having at least two bumps (26) and a coil (23) acting as a transmission and/or reception antenna, said coil being formed by an electrically conductive wire having two ends (29) respectively connected to said bumps of said integrated circuit chip, said coil surrounding a space in which said chip is placed, the base of the electronic module (14) being a metallic element that conducts magnetic flux to insulate the module coil magnetically from the metallic case during data communication between said read and/or write apparatus and said module, said module (14) and said cavity (13) that is open towards the exterior housing said module defining means for quickly and precisely positioning a complementary-shaped head (35) of said read and/or write apparatus.

2. Watch according to claim 1, **characterized in that** the base of the module is made of pure iron or a material including a nickel, iron, copper and molybdenum alloy, the alloy being composed particularly of 70 to 80% nickel and 10 to 20% iron.

3. Watch according to claim 1, **characterized in that** said cavity (13) and said module (14) have an essentially cylindrical shape and are located substantially in the centre of the back cover (3) of said case (1).

4. Watch according to any of claims 1 to 3, **characterized in that** said base (15) is dome-shaped and has a flat bottom (16) onto which said coil (23) of annular shape and said integrated circuit chip (24) are placed and a lateral wall (27) surrounding said coil, the height of the lateral wall counted from the inner surface of the flat bottom being greater than or equal to the thickness of the coil or the chip, and **in that** the base is housed in a cavity (13) of an external surface of the watch between the inner surface of the cavity and the coil.

5. Watch according to claim 1, **characterized in that** the electronic module includes a protective cover (28) having a bottom and a circular lateral wall (17), said cover being placed on said bottom to enclose the coil and the integrated circuit chip via said base (15), **in that** said cover is made of plastic or ceramic material or sapphire, **in that** the lateral wall (17) of the cover is fixed mostly inside said cavity, the bottom of said cover projecting in part outside said cavity, and **in that** said module (14) is secured by setting in said protective cover (28) into said cavity (13) or by bonding in said cavity (13) or by crimping in said cavity (13).

6. Watch according to claim 5, **characterized in that** the thickness of said lateral wall (17) of the cover slightly and continuously increases from its base to its top so as to have an external surface (18) able to cooperate with a complementary-shaped inner wall (19) of said cavity (13) in order to form dovetail type assembly means between said electronic module (14) and the cavity in the watch surface.

7. Watch according to claim 5, **characterized in that** said lateral wall (17) of the cover (28) has a cylindrical external surface (18) and said cavity (13) has an inner wall (19) that is also cylindrical.

8. Watch according to any of claims 1 to 3 and 5, **characterized in that** said base (15) is formed by a substantially circular rigid plate on which are fixed said annular-shaped coil (23) and said integrated circuit chip (24), said base being positioned between the external watch surface and the coil.

9. Watch according to claim 1, **characterized in that** said coil (23) and said integrated circuit chip (24) are directly secured by bonding onto said base (15) and **in that** said ends (29) of the coil wire are also directly fixed onto said bumps (26) of the integrated circuit chip by means of an electrically conductive material.

10. Watch according to claim 1, **characterized in that** said coil (23) and said integrated circuit chip (24) are fixed onto the substrate of a printed circuit (38), and **in that** said printed circuit has two connection bumps (40) located between said coil and said chip, onto which said ends (29) of said coil wire are fixed and two ends or two conductive wires (41) whose other ends are fixed onto said bumps (26) of said chip.

11. Watch according to claim 1, **characterized in that** said module (14) housed in the cavity has a part projecting outside the back cover (3) of said case (1) to define means for quickly and precisely positioning a complementary-shaped head (35) of a read and/or write apparatus.

## Patentansprüche

1. Uhr mit Metallgehäuse, die ein elektronisches Modul (14) zum Speichern von Informationen enthält, das wenigstens zum größten Teil in einem nach außen offenen Hohlraum (13) untergebracht ist, wobei der Hohlraum in einer äußeren Oberfläche der Uhr ausgebildet ist, wobei der Hohlraum eine zum Modul komplementäre Form besitzt, wobei das Modul über Funksignale mit einer Vorrichtung (35) zum Lesen und/oder Schreiben dieser Informationen kommunizieren kann, wobei das Modul einen Sockel (15) umfasst, auf dem ein integrierter Schaltungschip (24), der wenigstens zwei Verbindungsanschlüsse (26) aufweist, und eine Spule (23), die als Sende- und/oder Empfangsantenne dient, montiert sind, wobei die Spule durch einen elektrisch leitenden Draht mit zwei Enden (29) gebildet ist, die mit den jeweiligen Verbindungsanschlüssen des integrierten Schaltungschips verbunden sind, wobei diese Spule einen Raum umgibt, in dem der Chip angeordnet ist, wobei der Sockel des elektronischen Moduls (14) ein Metallelement zum Leiten von Magnetfluss ist, um die Spule des Moduls vom Metallgehäuse bei einer Übermittlung von Informationen zwischen der Vorrichtung zum Lesen und/oder Schreiben und dem Modul magnetisch zu isolieren, wobei das Modul (14) und der nach außen offene Hohlraum (13), der das Modul aufnimmt, Mittel definieren, um einen Kopf (35) mit einer zu der Lese-und/oder Schreibvorrichtung komplementären Form schnell und genau zu positionieren.

2. Uhr nach Anspruch 1, **dadurch gekennzeichnet, dass** der Sockel des Moduls aus reinem Eisen oder aus einem Material verwirklicht ist, das eine Legierung aus Nickel, Eisen, Kupfer und Molybdän enthält, wobei die Legierung insbesondere aus 70 bis 80 % Nickel und aus 10 bis 20 % Eisen gebildet ist.

3. Uhr nach Anspruch 1, **dadurch gekennzeichnet, dass** der Hohlraum (13) und das Modul (14) eine im Wesentlichen zylindrische Form haben und sich im Wesentlichen in der Mitte des Bodens (3) des Gehäuses (1) befinden.

4. Uhr nach einem der Ansprüche 1 bis 3, **dadurch gekennzeichnet, dass** der Sockel (15) die Form einer Schale hat, die einen ebenen Boden (16), auf dem die Spule (23) mit Ringform und der integrierte Schaltungschip (24) befestigt sind, und eine Seitenwand (27), die die Spule umgibt, aufweist, wobei die Höhe der Seitenwand gerechnet von der inneren Oberfläche des ebenen Bodens größer oder gleich der Dicke der Spule oder des Chips ist, und dass der Sockel in einem Hohlraum (13) einer äußeren Oberfläche der Uhr zwischen der inneren Oberfläche des Hohlraums und der Spule aufgenommen ist.

5. Uhr nach Anspruch 1, **dadurch gekennzeichnet, dass** das elektronische Modul einen Schutzdeckel (28) aufweist, der eine Grundfläche und eine kreisförmige Seitenwand (17) besitzt, wobei der Deckel auf dem Sockel angeordnet ist, um die Spule und den integrierten Schaltungschip mit Hilfe des Sockels (15) einzuschließen, dass der Deckel aus Kunststoff, Keramik oder Saphir her-gestellt ist, dass die Seitenwand (17) des Deckels zum größten Teil in dem Hohlraum befestigt ist, wobei die Grundfläche des Deckels teilweise in die äußere Umgebung des Hohlraums vorsteht, und dass das Modul (14) durch Eintreiben des Schutzdeckels (28) in den Hohlraum (13) oder durch Einkleben in den Hohlraum (13) oder durch Falzen in dem Hohlraum (13) befestigt ist.

6. Uhr nach Anspruch 5, **dadurch gekennzeichnet, dass** die Dicke der Seitenwand (17) des Deckels geringfügig und kontinuierlich von der Grundfläche bis zum obersten Punkt zunimmt, damit sie eine äußere Oberfläche (18) aufweist, die mit einer Innenwand (19) mit zum Hohlraum (13) komplementärer Form zusammenwirken kann, um ein Montagemittel des Schwalbenschwanztyps zwischen dem elektronischen Modul (14) und dem Hohlraum der Oberfläche der Uhr zu bilden.

7. Uhr nach Anspruch 5, **dadurch gekennzeichnet, dass** die Seitenwand (17) des Deckels (28) eine zylindrische äußere Oberfläche (18) aufweist und der Hohlraum (13) eine ebenfalls zylindrische Innenwand (19) aufweist.

8. Uhr nach einem der Ansprüche 1 bis 3 und 5, **dadurch gekennzeichnet, dass** der Sockel (15) durch eine im Wesentlichen kreisförmige starre Platte gebildet ist, auf dem die Spule (23) mit Ringform und der integrierte Schaltungschip (24) befestigt sind, wobei der Sockel zwischen der äußeren Oberfläche der Uhr und der Spule positioniert ist.

9. Uhr nach Anspruch 1, **dadurch gekennzeichnet, dass** die Spule (23) und der integrierte Schaltungschip (24) direkt durch Kleben auf dem Sockel (15) befestigt sind und dass die Enden (29) des Drahts der Spule ebenfalls direkt an den Anschlüssen (26) des integrierten Schaltungschips mittels eines elektrisch leitenden Materials befestigt sind.

10. Uhr nach Anspruch 1, **dadurch gekennzeichnet, dass** die Spule (23) und der integrierte Schaltungschip (24) auf dem Substrat einer gedruckten Schaltung (38) befestigt sind und dass die gedruckte Schaltung zwei Anschlussflächen (40) aufweist, die sich zwischen der Spule und dem Chip befinden, auf denen die Enden (29) des Drahts der Spule und zwei Enden von zwei Leiterdrähten (41) befestigt sind, deren andere Enden an den Verbindungsanschlüssen (26) des Chips befestigt sind.

11. Uhr nach Anspruch 1, **dadurch gekennzeichnet, dass** das Modul (14), das in dem Hohlraum untergebracht ist, einen in die äußere Umgebung des Bodens (3) des Gehäuses (1) vorstehenden Teil aufweist, um Mittel zu definieren, um einen Kopf (35) mit komplementärer Form einer Lese- und/oder Schreibvorrichtung schnell und genau zu positionieren.
